# EUROPEAN PATENT SPECIFICATION

(11) **EP 3 337 100 B1**
(45) Date of publication and mention of the grant of the patent: **01.05.2019**
(21) Application number: 16204369.9
(22) Date of filing: 15.12.2016
(51) Int. Cl.: H04L 12/28, H04M 11/02, H04N 7/18

(54) **METHOD FOR PROVIDING A COMMUNICATION BETWEEN A DOORBELL UNIT OF A SMART HOME AND AN EXTERNAL DEVICE, COMPUTER PROGRAM PRODUCTS AND DOORBELL UNIT**
VERFAHREN ZUR BEREITSTELLUNG VON KOMMUNIKATION ZWISCHEN EINER TÜRKLINGELEINHEIT EINES INTELLIGENTEN HEIMS UND EINER EXTERNEN VORRICHTUNG, COMPUTERPROGRAMMPRODUKTE UND TÜRKLINGELEINHEIT
PROCÉDÉ PERMETTANT DE FOURNIR UNE COMMUNICATION ENTRE UNE UNITÉ DE SONNETTE D'UNE MAISON INTELLIGENTE ET UN DISPOSITIF EXTERNE, PRODUITS-PROGRAMMES INFORMATIQUES ET UNITÉ DE SONNETTE

(43) Date of publication of application: 20.06.2018
(73) Proprietor: Vodafone GmbH, 40549 Düsseldorf (DE)
(72) Inventor: KRAFF, Torsten, 41470 Neuss (DE); BULJEVIC, Ivo, 40221 Düsseldorf (DE); BEURSGENS, Luuk, 6041DZ Roermond (NL)
(74) Representative: Patentanwälte Bals & Vogel

(56) References cited:
- WO-A1-2006/067782
- WO-A1-2016/153348
- US-A1- 2013 057 695
- US-A1- 2015 049 191
- US-A1- 2016 143 022

## Description

The present invention relates to a method for providing a communication connection between a doorbell unit of a smart home and an external device like a smartphone or a tablet computer outside the smart home. The invention further relates to a computer program product being stored and configured in a doorbell unit and/or an external device to carry out the method according to the invention. Moreover, the invention is related to a doorbell unit that is configured to carry out the preceding method.

A conventional entrance door intercom comprises a wired door intercom apparatus and a residential master station. In US 2007/0188307 A1 a wireless door intercom system is disclosed comprising a wireless door intercom apparatus affixed to the entrance of a building and a portable wireless signal transceiver. Further, there are known smart video-enabled doorbell units, by means of which it is possible to answer a call from the door from almost anywhere. People ringing at the door cannot perceive whether the house owner is at home or not when answering the call. Such doorbell units provide a convenient and reliable method of answering a call from a door from almost anywhere anytime.

Smart video doorbells units technically work in the following way. The doorbell unit is connected through Wi-Fi to a server in the internet and the user needs to download and install a custom mobile phone app. Upon activation of a bell at the doorbell unit, the server will trigger a notification to the registered smartphone of the user. The user will then respond to these notifications by opening the app and within the app he is able to consume audio or video from the doorbell unit and/or interact with a person in front of the doorbell unit.

DE 10 2011 102 353 A1 discloses a method for exchanging signals between a domestic communication system having a door station which has a call triggering device, and a communication device which is not part of the domestic communication system. According to DE 10 2011 102 353 A1 there is provision that, in response to a call triggered at the door station, a snapshot recorded by the camera is transmitted to the communication device and a corresponding image is displayed at the screen and in response to an activation of the user of the communication device a voice connection is established from the communication device to the door station.

Further doorbell units and methods for controlling the same are disclosed in WO 2006/067782 A1, US 2016/143022 A1 and US 2015/049191 A1.

However, looking at the above solutions from the viewpoint of a person that rings the doorbell, it can take a long time like more than 30 seconds before the communication between a doorbell unit and the smartphone device of the house owner is established and the two persons can talk. This might be too long for people like a postman who is mostly in a hurry.

It is an object of the present invention to overcome the above mentioned disadvantages. In particular, it is an object of the present invention to provide a method, a computer program product and a doorbell unit by means of which a communication connection between a doorbell unit of a smart home and an external device outside the smart home can be established quicker.

Aforesaid object is achieved by the subject-matters of the claims. In particular, the object is achieved by a method according to claim 1, a doorbell unit according to claim 9, as well as a computer program product according to claim 12 of the present application. Further features and details of the invention result from the dependent claims, the description and the figures. Features and details discussed with respect to the inventive method are also correlated with the inventive computer program products, the inventive doorbell unit and the other way around.

According to the present invention, a method provides a communication connection between a doorbell unit of a smart home and at least one external device outside the smart home. The method comprises the following steps:- detecting an activation of a bell of the doorbell unit,- upon detection of the activation of the bell, automatically establishing a call setup between the doorbell unit and the external device for a call, in particular a voice or combined voice and video call, between a user of the external device and an activator of the bell, and - sending bell information to the external device, wherein the bell information is an information about an operating status and/or the fact that someone or something has activated the bell. wherein the call setup is automatically turned into a voice call connection between the doorbell unit and the external device, and as soon as the voice call connection is established it is muted until the user of the external device purposely enters the call by unmuting the external device.

In accordance with the present invention, a pro-active call setup is provided. That is, the call setup, especially a voice call setup, is established automatically such that a user of the external device does not have to actively reply or acknowledge to a notification about someone ringing at the bell of the doorbell unit in terms of establishing a call setup. The purpose of the call setup is primarily to enable a swift voice connection between the person ringing the bell and person responding to the notification on the external device. Thus, the time from receiving the bell information at the external device until the user may respond to it after he got his smart device out and ready to respond, can be used for setting up a call, for example the voice or combined video and voice call for providing the communication connection and a voice/video call connection, respectively. Hence, the pro-active call setup can help to significantly reduce the call setup time and/or the call connection time, in particular from the viewpoint of the person that rings the bell at the doorbell unit. Consequently, the user experience will be improved and users will actually use the provided technology.

By providing the communication connection, the communication connection does not have to be actually established. That is, in case the doorbell unit or the external device does not respond to the automatically established call setup, an actual communication connection cannot be established between the doorbell unit and the external device but will only be provided.

The doorbell unit can be understood as an intercom of an entrance door of the smart home or any other smart building. By activating the bell of the doorbell unit, bell information will be sent to the external device. This information may be sent as a push notification to the external device to inform the user of the external device acoustically, visually and/or haptically about a happening in front of the doorbell unit. The bell information might be information about an operating status and/or information about the fact that someone or something has activated the bell. It is further preferred that, by sending the bell information, the user of the external device will be informed about the established call setup such that the user may simply enter an already established call connection, for example in the form of the voice or combined video and voice call connection. In the present application, the term voice call is not meant to exclude other call features like video transmission. That is, the presently mentioned voice call is not limited to a call transmitting audio only.

The bell can be activated by pushing a button or by swiping a certain surface portion of the doorbell unit and the entrance door, respectively. Further, the bell can be activated by an event or happening in front of or near the doorbell unit. This event might be a person moving in front of the doorbell unit and/or circumstances changing in front of the doorbell unit.

The establishing of the call setup between the doorbell unit and the external device is preferably performed immediately after, simultaneously or at least almost simultaneously with the detection of the activation of the bell carrying out the present method as fast as possible.

The external device can be a smart device, in particular a portable smart device like a smartphone or a tablet computer. The external device preferably has an integrated mobile radio communication means by means of which the call setup can be established via mobile radio communication from the external device to the doorbell unit. The mobile radio communication means mentioned in the present application comprises a communication means for mobile data communication via 3G (UMTS, HSDPA), 4G (LTE) and/or 5G, for example.

The present method shall preferably provide a communication connection between the doorbell unit of the smart home and a certain external device outside the smart home. However, according to the present invention, the communication connection may also be provided between one doorbell unit and a plurality of external devices. Such kind of communication connection can be provided in the form of a conference call, for example. By providing the communication connection and/or by establishing the call setup between the doorbell unit and a plurality of external devices, it is more likely to actually establish a communication connection between the doorbell unit and at least one of the external devices compared to the case in which the call setup is established between the doorbell unit and only one external device. In addition, a conference call could actually be performed between a person, like a child, in front of the doorbell unit and a plurality of persons, for example the parents of the child, being away from the smart home. This option might be helpful in a case in which the child locked itself out the house and wants to discuss with both of the parents about how to solve this problem.

The step of sending bell information to the external device does not have to be performed after the step of establishing the call setup. Specifically, there is no necessary order between these steps. The bell information can be sent as soon as the activation of the bell has been detected. Anyhow, it is preferred that the two steps of automatically establishing the call setup and sending the bell information are carried out simultaneously or almost simultaneously. More specifically, while automatically establishing the call setup the bell information will be automatically sent to the external device.

By muting a voice call connection there can be provided an actual voice call connection between the doorbell unit and the external device without the risk of transferring inappropriate information from the side of the external device to the side of the doorbell unit. For example, when the user of the external device in the form of a smartphone is in a secret meeting and does not notice an established voice call connection to the doorbell unit, sensitive information could be transferred to a random person waiting in front of the doorbell unit. By preventively muting the established voice call connection, this issue can be addressed properly. For entering the voice call, the user of the smartphone only has to unmute his smartphone or bring the active call in foreground mode. This can be done directly form the home screen or even from the lock screen of the smartphone, for instance by means of an accordingly installed app.

It is further possible that according to the present invention a method is characterized in that the doorbell unit comprises a camera, wherein a snapshot of an area in front of the doorbell unit taken by the camera is automatically sent to the external device, in particular via rich push notification, as soon as the call setup between the doorbell unit and the external device is established or as soon as the doorbell triggering event is detected. Due to the sent and accordingly received snapshot, the user of the external device is quickly informed about the situation in front of the doorbell unit. Based thereon, the user can quickly decide whether he wants to enter and accept the call or not. The snapshot is preferably sent together with the bell information in the form of a rich push notification. This safes time compared to sending the snapshot and the bell information separately. The bell information and the snapshot can be displayed on the external device, for example on the lock screen, next to each other and thus simultaneously. As a result, the user of the external device gets all the information he needs for his decision on whether to enter the call or not in one notification. This saves time and provides a satisfying user experience.

Moreover, it is possible that according to the present invention the method is characterized in that the doorbell unit comprises mobile radio communication means, wherein the call setup is established via mobile radio communication directly between the doorbell unit and the external device, in particular by telephony services such as circuit switched voice calls (CS voice), voice over LTE (VoLTE), rich communication services (RCS) and/or video over LTE (ViLTE). Establishing the call setup via mobile radio communication directly between the doorbell unit and the external device is faster than, for example, establishing a call setup via WiFi and an accordingly provided server connected to the doorbell unit between said server and the external device.

In accordance with another embodiment of the present invention a method is characterized in that the doorbell unit comprises a camera, wherein the call setup comprises video transmission between the doorbell unit and the external device, in particular from the doorbell unit to the external device, wherein the video transmission is established or not depending on the available data transmission speed of the doorbell unit and/or the external device. By means of this modification the call setup and the following voice call connecting including the video transmission will be performed only when a minimum data transmission speed and/or bitrate for transmitting the video signal is available and/or possible. Hence, provision of a fast communication connection including video transmission can be ensured at least up to the minimum required available data transmission speed. In case the available and/or possible data transmission speed of the doorbell unit and, in particular, of the external device, is too low, i.e., cannot reach a certain amount of Mbits/s, video transmission will be prohibited.

It is also a possibility that according to the present invention the method is characterized in that the call setup is established from the doorbell unit to the external device. Establishing the call setup directly from the doorbell unit to the external device results in a fast call setup and accordingly to a fast communication connecting between the doorbell unit and the external device. There is no time needed for getting feedback from the external device or acknowledgement by the user. The call setup from the doorbell unit to the external device is preferably established as mobile radio communication via a mobile radio communication means built into the doorbell unit.

It is further a possibility that according to the present invention the method is characterized in that information about activation of the bell is sent to the external device via push notification, wherein the call setup is established from the external device to the doorbell unit as soon as the external device receives the push notification. Establishing the call setup from the external device to the doorbell unit provides improved security against third parties, which might try to hack into the doorbell unit. Specifically, it could be set that the doorbell unit may only receive and enter incoming calls, that is, cannot start any calls by itself. In this way it is not possible to hack the doorbell unit and make phone calls in the expense of the smart home owner. By automatically establishing the call setup from the external device to the doorbell unit as soon as the external device receives the push notification, a quick provision of the required communication connection can still be ensured.

Further to increase security and reduce fraud, the doorbell can be programmed to respond only to a certain caller number or number range that defines those external devices, that are allowed to set up calls with the doorbell.

According to another embodiment of the present invention a method is characterized in that the call setup comprises a voice call setup and video transmission, in particular video transmission from the doorbell unit to the external device, wherein the call setup is automatically turned into a voice call connection between the doorbell unit and the external device, and as soon as the voice call connection is established it is muted until the user of the external device enters the call, wherein the video transmission is paused as soon as the user of the external device enters the call. Once the user of the external device knows to which person(s) he is talking to, he may not need any further video transmission. Hence, data for video transmission can be reduced.

A further possibility is achieved by a method according to the present invention being characterized in that activation of the bell is detected, before the bell is physically pushed, by means of at least one of the following:
- motion recognition in front of the doorbell unit,
- noise recognition in front of the doorbell unit,
- image recognition of at least one image shot in front of the doorbell unit.

In this way bell information can be sent to the external device before the bell will physically be pushed or otherwise touched. That is, an activation of the bell can be detected without the need of physically contacting the bell. For instance, a predetermined movement, noise, situation and/or change of situation in front of the doorbell unit is recognized and based thereon, the bell will be activated. Consequently, the call setup between the doorbell unit and the external device can be established even before the bell is physically contacted. In this way, the communication connection can be provided in a considerably fast manner. Motion recognition, noise recognition and image recognition can be performed via suitable computer hard- and/or software.

According to another aspect of the present invention a doorbell unit is provided for a smart home configured to establish the above described communication with an external device outside the smart home. The doorbell unit comprises a mobile radio communication means for establishing a call setup directly from the doorbell unit to the external device via mobile radio communication. Hence, the inventive doorbell unit also brings up the advantages that have been discussed in detail with respect to the method according to the invention.

A doorbell unit according to a further embodiment of the present invention is characterized in that the mobile radio communication means comprises a SIM card slot for receiving a SIM card for establishing the call setup. By means of this feature different SIM cards from different providers can be easily changed in the doorbell unit thus ensuring an easy, reliable and cheap way of establishing the call connection.

In accordance with the present invention it is also possible that the doorbell unit is characterized in that the mobile radio communication means comprises an integrated SIM card, in particular an e-SIM card, for establishing the call setup. The integrated SIM card may provide an extra easy and cheap way of establishing the call connection since different provider and/or contract information can be easily changed and/or updated via firmware, for example.

Within the scope of another aspect of the present invention a computer program product being stored on a computer readable medium provided for an external device, in particular for a portable smart device, is provided. Said computer program product is configured to provide a communication connection between a doorbell unit of a smart home and the external device outside the smart home. The computer program product comprises:- notification means for notifying a user of the external device about bell information of the doorbell unit, and- reply means configured to automatically establishing a call setup from the external device to the doorbell unit for a call between a user of the external device and an activator of the bell as soon as the bell information is received at the external device, wherein the bell information is an information about an operating status and/or the fact that someone or something has activated the bell,wherein the reply means is configured to automatically establish the call in

the form of a voice call as well as automatically mute the voice call as soon as a voice call connection is established until the user of the external device enters the call by unmuting the external device.

Therefore, the inventive computer program product for the external device, in particular in the form of an app for a smartphone, a table computer and/or another portable smart device, brings up the above described advantages in this respect as well. Such computer program product can be further characterized in that the reply means is configured to automatically establish the call in the form of a voice call as well as automatically mute the voice call as soon as a voice call connection is established. Moreover, the reply means can be configured to automatically establish the call in the form of a voice call as well as a video call having video transmission from the external

device to the doorbell unit, wherein the reply means is further configured to automatically turn the call setup into a voice call connection between the doorbell unit and the external device, and as soon as the voice call connection is established it is muted until the user of the external device enters the call, wherein the video transmission is paused as soon as the user of the external device enters the call.

The present invention is discussed in more detail with respect to the accompanying drawings, in which
- Fig. 1: shows a flow chart for explaining a method for providing a communication connection as known in prior art,
- Fig. 2: shows a flow chart for explaining a method for providing a communication connection according to a first embodiment of the present invention,
- Fig. 3: shows a flow chart for explaining a method for providing a communication connection according to a second embodiment of the present invention, and
- Fig. 4: shows a block diagram for describing a doorbell unit and a computer program product according to an embodiment of the present invention.

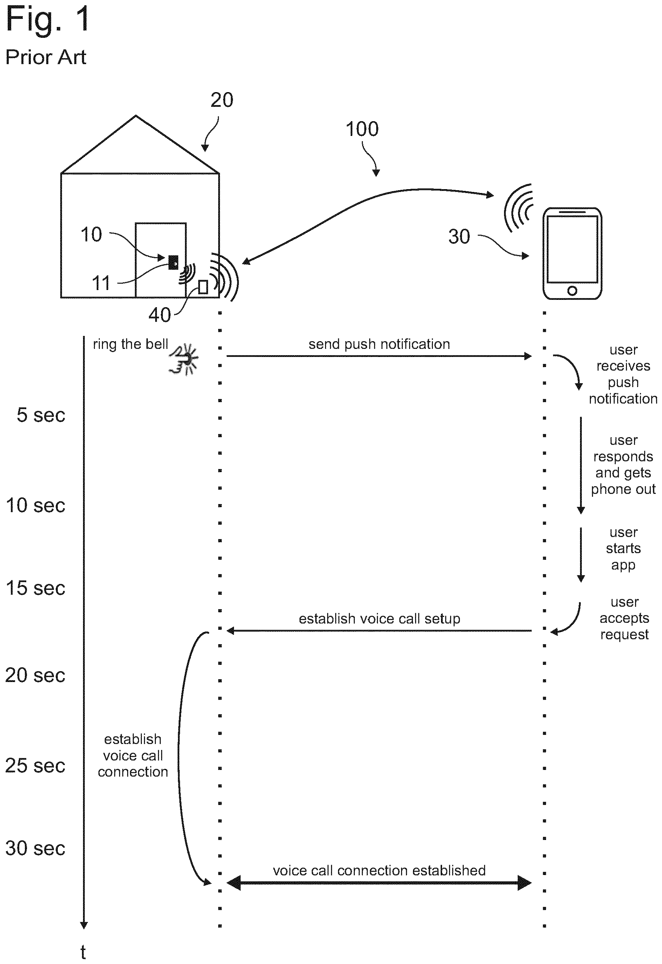

Fig. 1 shows a flow chart for explaining a method for providing a communication connection between a doorbell unit 10 of a smart home 20 and an external device 30 in the form of a smartphone outside the smart home 20 as known in prior art.

As shown in Fig. 1, the doorbell unit 10 comprises a bell 11. The bell 11 and the doorbell unit 10, respectively, are wirelessly connected to a server 40. A call setup in the form of a voice call setup 100 and a following voice call connection between the external device 30 and the doorbell unit 10 will be established via the server 40.

As illustrated in Fig. 1, a push notification is sent to the external device 30 of a user as soon as the bell 11 is activated. This takes about 2 to 3 seconds.

By displaying the push notification on the external device 30 and optional accompanying acoustical and/or haptical signals, the user is informed about the activated bell 11. As a consequence, the user gets out the device 30 and starts an app corresponding to the transmitted information from the doorbell unit 10 and the server 40, respectively. This takes about 5 to 10 seconds.

As soon as the user accepts the request from the doorbell unit 10 in order to establish a voice call setup 100, said voice call setup 100 is established. Establishing the voice call setup 100 as well as establishing the following voice call connection takes about 10 to 20 seconds. Thereafter, the user of the external device 30 can talk to a person in front of the doorbell unit 10. In total, the above method takes about 25 to 40 seconds.

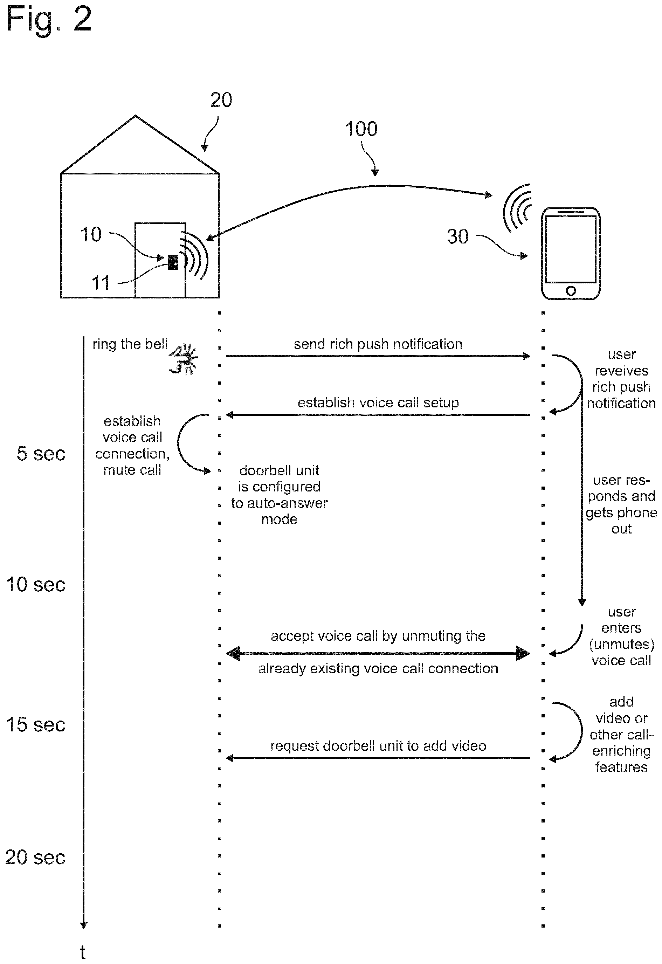

Fig. 2 shows a flow chart for explaining a method for providing a communication connection between a doorbell unit 10 of a smart home 20 and an external device 30 in the form of a smartphone outside the smart home 20 according to a first embodiment of the present invention. The system of the smart home 20 and the external device 30 of Fig. 2 is similar to that of Fig. 1. However, there is no need for the server 40 as a link between the doorbell unit 10 and the external device 30.

As shown in Fig. 2, a rich push notification including event information and a snapshot is sent to the external device 30 of a user as soon as the bell 11 is activated, wherein said activation is detected. This takes about 2 to 3 seconds.

As soon as the rich push notification is received at the external device 30, i.e., after detection of the activation of the bell 11, a voice call setup 100 is automatically established from the external device 30 to the doorbell unit 10 in order to establish a voice call between a user of the external device 30 and an activator of the bell 11. The voice call setup 100 is established via mobile radio communication directly between the doorbell unit 10 and the external device 30. The established voice call setup 100 automatically turns into a voice call connection between the external device 30 and the doorbell unit 10, provided that the external device 30 is able to receive the necessary signals from the doorbell unit 10. As soon as the voice call connection is established, it is muted. Meanwhile, the doorbell unit 10 is configured to auto-answer mode. All this takes about 10 to 20 seconds.

During establishing the voice call setup 100, the rich push notification is displayed on the external device 30, optionally accompanied by acoustical and/or haptical signals. As a consequence, the user gets out the device 30 and starts an app corresponding to the transmitted information from the doorbell unit 10. This takes about 5 to 10 seconds.

In a normal case, the voice call connection is already established or at least almost established as soon as the user of the external device 30 holds the device 30 in his hand while trying to enter the voice call. In this case, the user now only has to unmute the voice call and/or the voice part of the call in order to speak to the person in front of the doorbell unit 10. In total, the inventive provision of the communication connection will only take about 10 to 20 seconds.

As soon as the voice call connection is established, video or other call-enriching features may be added to the voice call by sending a corresponding request to the doorbell unit 10.

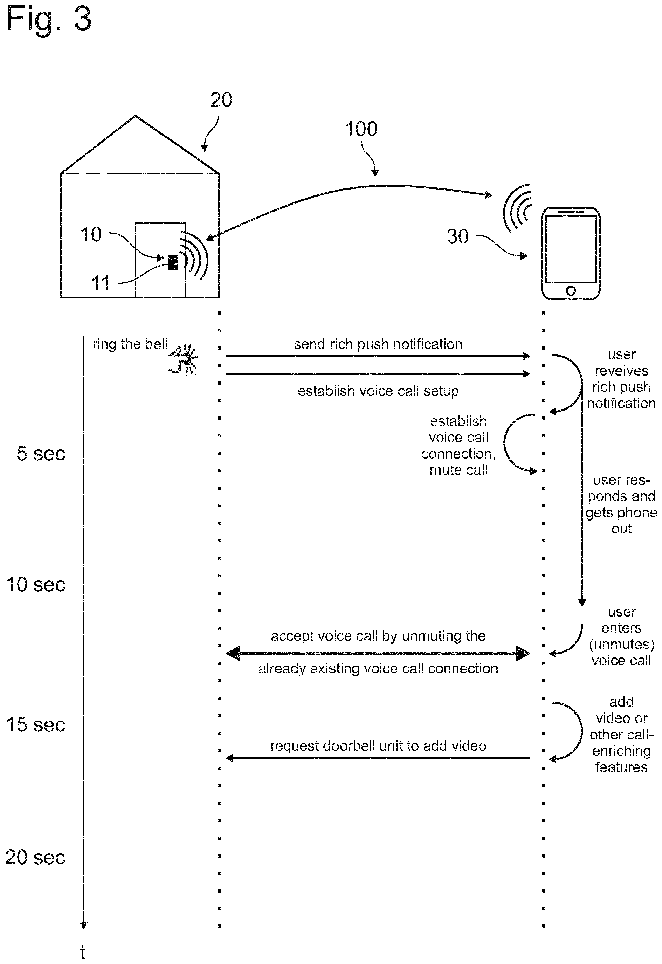

Fig. 3 shows a flow chart for explaining a method for providing a communication connection between a doorbell unit 10 of a smart home 20 and an external device 30 in the form of a smartphone outside the smart home 20 according to a further embodiment of the present invention. The system of the smart home 20 and the external device 30 of Fig. 3 is similar to that of Fig. 2. In order to avoid redundancy, the description of Fig. 3 will mainly be given in terms of distinguishing features between Fig. 2 and Fig. 3.

As shown in Fig. 3, as soon as the bell is rung, a voice call setup 100 is established from the doorbell unit 10 to the external device 30. This results in an even faster voice call connection between the doorbell unit 10 and the external device 30.

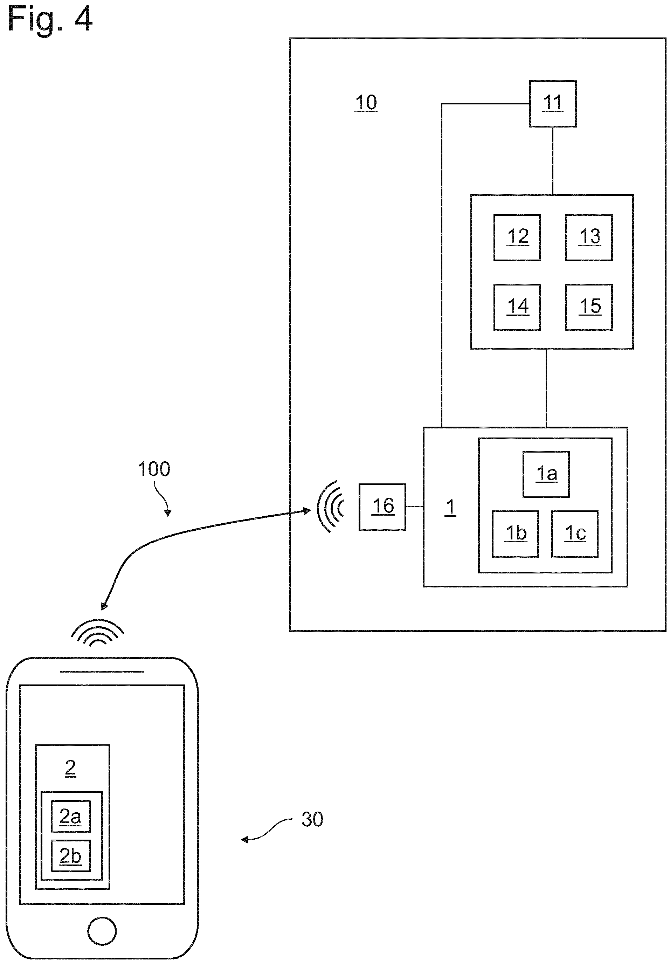

Fig. 4 shows the doorbell unit 10 as well as the external device 30 of Fig. 2 and Fig. 3 in an enlarged view. The doorbell unit 10 is configured to establish communication with the external device 30 outside the smart home 20. As shown in Fig. 4, the doorbell unit comprises a mobile radio communication means 16 for establishing a call setup 100 directly from the doorbell unit 10 to the external device 30 via mobile radio communication. The mobile radio communication means 16 comprises an e-SIM card (not shown) for establishing the voice call setup 100.

The doorbell unit 10 of Fig. 4 further comprises the bell 11. In addition, the doorbell unit 10 comprises a camera 12, a motion sensor 13 for motion recognition in front of the doorbell unit 10, a noise sensor 14 for noise recognition in front of the doorbell unit 10, as well as an image recognition unit 15 for image recognition of images in the form of pictures and/or film shot in front of the doorbell unit 10.

As further shown in Fig. 4, the doorbell unit 10 comprises a computer program product 1 configured to provide a communication connection between the doorbell unit 10 of the smart home 20 and the external device 30 outside the smart home 20. The computer program product 1 comprises detecting means 1a for detecting an activation of a bell 11 of the doorbell unit 10, establishing means 1b configured to establish, upon detection of the activation of the bell 11, automatically a voice call setup 100 between the doorbell unit 10 and the external device 30 for a voice call between a user of the external device 30 and an a person or an animal in front of the doorbell unit 10, and developing means 1c configured to develop bell information to be sent to the external device 30. The computer program product 1 of the doorbell unit 10 comprises computer readable program means initiating a computer to carry out the above described method.

The external device 30 also comprises a computer program product 2. The computer program product 2 of the external device 30 is provided as an app on the external device 30, which is, as already mentioned above, configured as a smartphone. The computer program product 2 is configured to provide a communication connection between the doorbell unit 10 of the smart home 20 and the external device 30 outside the smart home 20. The computer program product 2 comprises notification means 2a for notifying a user of the external device 30 about bell information of the doorbell unit 10. The computer program product 2 further comprises reply means 2b configured to automatically establishing a voice call setup 100 from the external device 30 to the doorbell unit 10 for a voice call between a user of the external device 30 and an activator of the bell 11 as soon as the bell information is received at the external device 30. The reply means 2b is configured to automatically mute the voice call as soon as a voice call connection between the doorbell unit 10 and the external device 30 is established.

The aforesaid description of the accompanying drawings is only by the way of detail and example. Specific features of each aspect of the present invention and the figures can be combined which each other if of technical sense.

In a further embodiment, the voice call setup 100 may comprise video transmission between the doorbell unit 10 and the external device 30, wherein the video transmission is established only in case the available data transmission speed of the doorbell unit 10 and the external device 30 provides a certain bitrate. The external device 30 is not restricted to a portable device but may also be a stationary device.

### REFERENCE SIGNS

- 1: Computer program product of the doorbell unit
- 1a: detecting means
- 1b: establishing means
- 1c: developing means

- 2: Computer program product of the external device
- 2a: notification means
- 2b: reply means

- 10: doorbell unit
- 11: bell
- 12: camera
- 13: motion sensor
- 14: noise sensor
- 15: image recognition unit
- 16: mobile radio communication means
- 20: smart home
- 30: external device
- 40: server

- 100: (voice) call setup

## Claims

1. Method for providing a communication connection between a doorbell unit (10) of a smart home (20) and at least one external device (30) outside the smart home (20), comprising the steps:
- detecting an activation of a bell (11) of the doorbell unit (10),
- upon detection of the activation of the bell (11), automatically establishing a call setup (100) between the doorbell unit (10) and the external device (30) for a call between a user of the external device (30) and an activator of the bell (11), and
- sending bell information to the external device (10), wherein the bell information is an information about an operating status and/or the fact that someone or something has activated the bell (11)
**characterized in that** the call setup (100) is automatically turned into a voice call connection between the doorbell unit (10) and the external device (30), and as soon as the voice call connection is established it is muted until the user of the external device (30) enters the call by unmuting the external device (30).

2. Method according to claim 1, **characterized in that** the doorbell unit (10) comprises a camera (12), wherein a snapshot of an area in front of the doorbell unit (10) taken by the camera (12) is automatically sent to the external device (30), in particular via rich push notification, as soon as the call setup (100) between the doorbell unit (11) and the external device (30) is established.

3. Method according to any one of the above claims,
**characterized in that** the doorbell unit (10) comprises mobile radio communication means (16), wherein the call setup (100) is established via mobile radio communication directly between the doorbell unit (10) and the external device (30), in particular by telephony services such as circuit switched voice calls, CS voice, voice over LTE, VoLTE, rich communication services, RCS, and/or video over LTE, ViLTE.

4. Method according to any one of the above claims,
**characterized in that** the doorbell unit (10) comprises a camera (12), wherein the call setup (100) comprises video transmission between the doorbell unit (10) and the external device (30), in particular from the doorbell unit (10) to the external device (30), wherein the video transmission is established or not depending on the available data transmission speed of the doorbell unit (10) and/or the external device (30).

5. Method according to any one of the above claims,
**characterized in that** the call setup (100) is established from the doorbell unit (10) to the external device (30)

6. Method according to any one of claims 1 to 4,
**characterized in that** information about activation of the bell (11) is sent to the external device (30) via push notification, wherein the call setup (100) is established from the external device (30) to the doorbell unit (10) as soon as the external device (30) receives the push notification.

7. Method according to any one of the above claims,
**characterized in that** activation of the bell (11) is detected, before the bell (11) is physically pushed, by means of at least one of the following:
- motion recognition in front of the doorbell unit (10),
- noise recognition in front of the doorbell unit (10),
- image recognition of at least one image shot in front of the doorbell unit (10).

8. Method according to any one of the above claims,
**characterized in that** the call setup (100) comprises a voice call setup and video transmission, wherein the call setup (100) is automatically turned into a voice call connection between the doorbell unit (10) and the external device (30), and as soon as the voice call connection is established it is muted until the user of the external device (30) enters the call, wherein the video transmission is paused as soon as the user of the external device (30) enters the call.

9. Doorbell unit (10) for a smart home (20) for establishing communication with an external device (30) outside the smart home (20) comprising a mobile radio communication means (16) for establishing a call setup (100) directly from the doorbell unit (10) to the external device (30) via mobile radio communication; the doorbell unit comprising further means to perform all the steps of the method according to any of claims 1 to 8.

10. Doorbell unit (10) according to claim 9,
**characterized in that** the mobile radio communication means (16) comprises a SIM card slot for receiving a SIM card for establishing the call setup (100).

11. Doorbell unit (10) according to any one of claims 9 to 10,
**characterized in that** the mobile radio communication means (16) comprises an integrated SIM card, in particular an e-SIM card, for establishing the call setup (100).

12. Computer program product (2) being stored on a computer readable medium provided for an external device (30), in particular for a mobile smart device, configured to provide a communication connection between a doorbell unit (10) of a smart home (20) and the external device (30) outside the smart home (20), comprising:
- notification means (2a) for notifying a user of the external device (30) about bell information of the doorbell unit (10), and
- reply means (2b) configured to automatically establishing a call setup (100) from the external device (30) to the doorbell unit (10) for a call between a user of the external device (30) and an activator of the bell (11) as soon as the bell information is received at the external device (30), wherein the bell information is an information about an operating status and/or the fact that someone or something has activated the bell (11),
**characterized in that** the reply means (2b) is configured to automatically establish the call in the form of a voice call as well as automatically mute the voice call as soon as a voice call connection is established until the user of the external device (30) enters the call by unmuting the external device (30).

13. Computer program product (2) according to claim 12,
**characterized in that** the reply means (2b) is configured to automatically establish the call in the form of a voice call as well as a video call having video transmission from the external device (30) to the doorbell unit (10), wherein the reply means (2b) is further configured to automatically turn the call setup (100) into a voice call connection between the doorbell unit (10) and the external device (30), and as soon as the voice call connection is established it is muted until the user of the external device (30) enters the call, wherein the video transmission is paused as soon as the user of the external device (30) enters the call.

## Patentansprüche

1. Verfahren zum Bereitstellen einer Kommunikationsverbindung zwischen einer Türklingel-Einheit (10) eines Smart Home (20) und mindestens einer externen Vorrichtung (30) außerhalb des Smart Home (20), umfassend die Schritte:
- Erfassen einer Aktivierung einer Klingel (11) der Türklingel-Einheit (10),
- automatischer Rufaufbau (100) zwischen der Türklingel-Einheit (10) und der externen Vorrichtung (30) für einen Anruf zwischen einem Benutzer der externen Vorrichtung (30) und einem Aktivator der Klingel (11) bei Erkennen der Aktivierung der Klingel (11), und
- Senden von Klingelinformationen an die externe Vorrichtung (30), wobei die Klingelinformationen eine Information über einen Betriebszustand und/oder die Tatsache sind, dass jemand oder etwas die Klingel (11) aktiviert hat,
**dadurch gekennzeichnet, dass** der Rufaufbau (100) automatisch in eine Sprachanrufverbindung zwischen der Türklingel-Einheit (10) und der externen Vorrichtung (30) umgewandelt wird, und sobald die Sprachanrufverbindung hergestellt ist, wird sie stummgeschaltet, bis der Benutzer der externen Vorrichtung (30) durch Aufheben der Stummschaltung der externen Vorrichtung (30) in den Anruf eintritt.

2. Verfahren nach Anspruch 1,
**dadurch gekennzeichnet, dass** die Türklingel-Einheit (10) eine Kamera (12) umfasst, wobei eine von der Kamera (12) aufgenommene Momentaufnahme eines Bereichs vor der Türklingel-Einheit (10) automatisch an die externe Vorrichtung (30) gesendet wird, insbesondere durch Rich-Push-Meldung, sobald der Rufaufbau (100) zwischen der Türklingel-Einheit (10) und der externen Vorrichtung (30) hergestellt ist.

3. Verfahren nach einem der vorangehenden Ansprüche,
**dadurch gekennzeichnet, dass** die Türklingel-Einheit (10) Mobilfunkkommunikationsmittel (16) umfasst, wobei der Rufaufbau (100) über Mobilfunk direkt zwischen der Türklingel-Einheit (10) und der externen Vorrichtung (30) aufgebaut ist, insbesondere durch Telefonie-Dienste wie leitungsvermittelte Sprachanrufe, CS-Voice, Voice over LTE, VoLTE, Rich Communication Services, RCS und/oder Video over LTE, ViLTE.

4. Verfahren nach einem der vorangehenden Ansprüche,
**dadurch gekennzeichnet, dass** die Türklingel-Einheit (10) eine Kamera (12) umfasst, wobei der Rufaufbau (100) eine Videoübertragung zwischen der Türklingel-Einheit (10) und der externen Vorrichtung (30), insbesondere von der Türklingel-Einheit (10) zu der externen Vorrichtung (30), umfasst, wobei die Videoübertragung aufgebaut ist oder nicht, abhängig von der verfügbaren Datenübertragungsgeschwindigkeit der Türklingel-Einheit (10) und/oder der externen Vorrichtung (30).

5. Verfahren nach einem der vorangehenden Ansprüche,
**dadurch gekennzeichnet, dass** der Rufaufbau (100) von der Türklingel-Einheit (10) zu der externen Vorrichtung (30) aufgebaut ist.

6. Verfahren nach einem der vorangehenden Ansprüche 1 bis 4,
**dadurch gekennzeichnet, dass** Informationen über die Aktivierung der Klingel (11) per Push-Benachrichtigung an die externe Vorrichtung (30) gesendet werden, wobei der Rufaufbau (100) von der externen Vorrichtung (30) an die Türklingel-Einheit (10) aufgebaut wird, sobald die externe Vorrichtung (30) die Push-Benachrichtigung empfängt.

7. Verfahren nach einem der vorangehenden Ansprüche,
**dadurch gekennzeichnet, dass** die Aktivierung der Klingel (11) erfasst wird, bevor die Klingel (11) physisch gedrückt wird, mittels mindestens eines der folgenden Verfahren:
- Bewegungserkennung vor der Türklingel-Einheit (10),
- Geräuscherkennung vor der Türklingel-Einheit (10),
- Bilderkennung von mindestens einer Bildaufnahme vor der Türklingel-Einheit (10).

8. Verfahren nach einem der vorangehenden Ansprüche,
**dadurch gekennzeichnet, dass** der Rufaufbau (100) einen Sprachanrufaufbau und eine Videoübertragung umfasst, wobei der Rufaufbau (100) automatisch in eine Sprachanrufverbindung zwischen der Türklingel-Einheit (10) und der externen Vorrichtung (30) umgewandelt wird, und sobald die Sprachanrufverbindung hergestellt ist, wird sie stummgeschaltet, bis der Benutzer der externen Vorrichtung (30) in den Ruf eintritt, wobei die Videoübertragung angehalten wird, sobald der Benutzer der externen Vorrichtung (30) in den Ruf eintritt.

9. Türklingel-Einheit (10) für ein Smart Home (20) zum Herstellen der Kommunikation mit einer externen Vorrichtung (30) außerhalb des Smart Home (20), umfassend ein Mobilfunkkommunikationsvorrichtung (16) zum Herstellen eines Rufaufbaus (100) direkt von der Türklingel-Einheit (10) zu der externen Vorrichtung (30) über Mobilfunkverbindung; wobei die Türklingel-Einheit weitere Vorrichtungen umfasst, um alle Schritte des Verfahrens nach einem der Ansprüche 1 bis 8 durchzuführen.

10. Türklingel-Einheit (10) nach Anspruch 9,
**dadurch gekennzeichnet, dass** die Mobilfunkkommunikationsvorrichtung (16) einen SIM-Kartenschlitz zum Aufnehmen einer SIM-Karte zum Aufbau des Verbindungsaufbaus (100) umfasst.

11. Türklingel-Einheit (10) nach einem der Ansprüche 9 bis 10,
**dadurch gekennzeichnet, dass** die Mobilfunkkommunikationsvorrichtung (16) eine integrierte SIM-Karte, insbesondere eine e-SIM-Karte, zum Aufbau des Verbindungsaufbaus (100) umfasst.

12. Computerprogrammprodukt (2), das auf einem computerlesbaren Medium gespeichert ist, das für eine externe Vorrichtung (30), insbesondere für eine mobile intelligente Vorrichtung, vorgesehen ist, die konfiguriert ist, um eine Kommunikationsverbindung zwischen einer Türklingel-Einheit (10) eines Smart Home (20) und der externen Vorrichtung (30) außerhalb des Smart Home (20) bereitzustellen, umfassend:
- eine Benachrichtigungsvorrichtung (2a) zum Benachrichtigen eines Benutzers der externen Vorrichtung (30) über Klingelinformationen der Türklingel-Einheit (10), und
- eine Antwortvorrichtung (2b), die konfiguriert ist, um automatisch einen Rufaufbau (100) von der externen Vorrichtung (30) zur Türklingel-Einheit (10) für einen Anruf zwischen einem Benutzer der externen Vorrichtung (30) und einem Aktivator der Klingel (11) herzustellen, sobald die Klingelinformationen an der externen Vorrichtung (30) empfangen werden, wobei die Klingelinformationen eine Information über einen Betriebszustand und/oder die Tatsache sind, dass jemand oder etwas die Klingel (11) aktiviert hat,
**dadurch gekennzeichnet, dass** die Antwortvorrichtung (2b) derart konfiguriert ist, um den Anruf automatisch in Form eines Sprachanrufs aufzubauen und den Sprachanruf automatisch stumm zu schalten, sobald eine Sprachanrufverbindung hergestellt ist, bis der Benutzer der externen Vorrichtung (30) durch Aufheben der Stummschaltung der externen Vorrichtung (30) in den Anruf eintritt.

13. Computerprogrammprodukt (2) nach Anspruch 12,
**dadurch gekennzeichnet, dass** die Antwortvorrichtung (2b) derart konfiguriert ist, um den Anruf automatisch in Form eines Sprachanrufs sowie eines Videoanrufs mit Videoübertragung von der externen Vorrichtung (30) zur Türklingel-Einheit (10) aufzubauen, wobei die Antwortvorrichtung (2b) ferner konfiguriert ist, um den Anrufaufbau (100) automatisch in eine Sprachanrufverbindung zwischen der Türklingel-Einheit (10) und der externen Vorrichtung (30) zu verwandeln, und sobald die Sprachanrufverbindung hergestellt ist, wird sie stummgeschaltet, bis der Benutzer der externen Vorrichtung (30) in den Anruf eintritt, wobei die Videoübertragung angehalten wird, sobald der Benutzer der externen Vorrichtung (30) in den Anruf eintritt.

## Revendications

1. Procédé de fourniture d'une connexion de communication entre une unité de sonnette de porte (10) d'une maison intelligente (20) et au moins un dispositif externe (30) en dehors de la maison intelligente (20), comprenant les étapes :
- de détection d'une activation d'une sonnerie (11) de l'unité de sonnette de porte (10),
- lors de la détection de l'activation de la sonnerie (11), de réalisation automatique d'un établissement d'appel (100) entre l'unité de sonnette de porte (10) et le dispositif externe (30) pour un appel entre un utilisateur du dispositif externe (30) et un activateur de la sonnette (11), et
- d'envoi d'informations de sonnerie au dispositif externe (10), les informations de sonnerie étant des informations concernant un statut de fonctionnement et/ou le fait que quelqu'un ou quelque chose a activé la sonnerie (11)
**caractérisé en ce que** l'établissement d'appel (100) est changé automatiquement en une connexion d'appel vocal entre l'unité de sonnette de porte (10) et le dispositif externe (30), et dès que la connexion d'appel vocal est réalisée, le son est désactivé jusqu'à ce que l'utilisateur du dispositif externe (30) commence l'appel en activant le son du dispositif externe (30).

2. Procédé selon la revendication 1,
**caractérisé en ce que** l'unité de sonnette de porte (10) comprend une caméra (12), un cliché d'une zone devant l'unité de sonnette de porte (10) pris par la caméra (12) étant envoyé automatiquement au dispositif externe (30), en particulier par l'intermédiaire d'une notification poussée enrichie, dès que l'établissement d'appel (100) entre l'unité de sonnette de porte (11) et le dispositif externe (30) est réalisé.

3. Procédé selon l'une quelconque des revendications précédentes,
**caractérisé en ce que** l'unité de sonnette de porte (10) comprend un moyen de radiocommunication mobile (16), l'établissement d'appel (100) étant réalisé par l'intermédiaire d'une radiocommunication mobile directement entre l'unité de sonnette de porte (10) et le dispositif externe (30), en particulier par des services de téléphonie tels que les appels vocaux à commutation de circuit, voix CS, la voix sur LTE, VoLTE, les services de communication enrichis, RCS, et/ou la vidéo sur LTE, ViLTE.

4. Procédé selon l'une quelconque des revendications précédentes,
**caractérisé en ce que** l'unité de sonnette de porte (10) comprend une caméra (12), l'établissement d'appel (100) comprenant une transmission vidéo entre l'unité de sonnette de porte (10) et le dispositif externe (30), en particulier de l'unité de sonnette de porte (10) au dispositif externe (30), la transmission vidéo étant réalisée ou non selon la vitesse de transmission de données disponible de l'unité de sonnette de porte (10) et/ou du dispositif externe (30).

5. Procédé selon l'une quelconque des revendications précédentes,
**caractérisé en ce que** l'établissement d'appel (100) est réalisé de l'unité de sonnette de porte (10) au dispositif externe (30).

6. Procédé selon l'une quelconque des revendications 1 à 4,
**caractérisé en ce que** des informations concernant une activation de la sonnerie (11) sont envoyées au dispositif externe (30) par l'intermédiaire d'une notification poussée, l'établissement d'appel (100) étant réalisé du dispositif externe (30) à l'unité de sonnette de porte (10) dès que le dispositif externe (30) reçoit la notification poussée.

7. Procédé selon l'une quelconque des revendications précédentes,
**caractérisé en ce qu'**une activation de la sonnerie (11) est détectée, avant que la sonnerie (11) soit poussée physiquement, au moyen d'au moins l'un des éléments suivants :
- une reconnaissance de mouvement devant l'unité de sonnette de porte (10),
- une reconnaissance de bruit devant l'unité de sonnette de porte (10),
- une reconnaissance d'image d'au moins une image prise devant l'unité de sonnette de porte (10).

8. Procédé selon l'une quelconque des revendications précédentes,
**caractérisé en ce que** l'établissement d'appel (100) comprend un établissement d'appel vocal et une transmission vidéo, l'établissement d'appel (100) étant changé automatiquement en une connexion d'appel vocal entre l'unité de sonnette de porte (10) et le dispositif externe (30), et dès que la connexion d'appel vocal est réalisée, le son étant désactivé jusqu'à ce que l'utilisateur du dispositif externe (30) commence l'appel, la transmission vidéo étant interrompue dès que l'utilisateur du dispositif externe (30) commence l'appel.

9. Unité de sonnette de porte (10) destinée à une maison intelligente (20) pour réaliser une communication avec un dispositif externe (30) en dehors de la maison intelligente (20) comprenant un moyen de radiocommunication mobile (16) pour réaliser un établissement d'appel (100) directement de l'unité de sonnette de porte (10) au dispositif externe (30) par l'intermédiaire d'une radiocommunication mobile ; l'unité de sonnette de porte comprenant des moyens supplémentaires pour effectuer toutes les étapes du procédé selon l'une quelconque des revendications 1 à 8.

10. Unité de sonnette de porte (10) selon la revendication 9,
**caractérisée en ce que** le moyen de radiocommunication mobile (16) comprend un emplacement pour carte SIM pour recevoir une carte SIM afin de réaliser l'établissement d'appel (100).

11. Unité de sonnette de porte (10) selon l'une quelconque des revendications 9 à 10, **caractérisée en ce que** le moyen de radiocommunication mobile (16) comprend une carte SIM intégrée, notamment une carte e-SIM, afin de réaliser l'établissement d'appel (100).

12. Produit de programme d'ordinateur (2) stocké sur un support lisible par ordinateur prévu pour un dispositif externe (30), en particulier pour un dispositif intelligent mobile, configuré pour fournir une connexion de communication entre une unité de sonnette de porte (10) d'une maison intelligente (20) et le dispositif externe (30) en dehors de la maison intelligente (20), comprenant :
- un moyen de notification (2a) pour notifier à un utilisateur du dispositif externe (30) des informations de sonnerie de l'unité de sonnette de porte (10), et
- un moyen de réponse (2b) configuré pour réaliser automatiquement un établissement d'appel (100) du dispositif externe (30) à l'unité de sonnette de porte (10) pour un appel entre un utilisateur du dispositif externe (30) et un activateur de la sonnerie (11) dès que les informations de sonnerie sont reçues au niveau du dispositif externe (30), les informations de sonnerie étant des informations concernant un statut de fonctionnement et/ou le fait que quelqu'un ou quelque chose a activé la sonnerie (11),
**caractérisé en ce que** le moyen de réponse (2b) est configuré pour réaliser automatiquement l'appel sous la forme d'un appel vocal ainsi que pour désactiver automatiquement le son de l'appel vocal dès qu'une connexion d'appel vocal est réalisée jusqu'à ce que l'utilisateur du dispositif externe (30) commence l'appel en activant le son du dispositif externe (30).

13. Produit de programme d'ordinateur (2) selon la revendication 12,
**caractérisé en ce que** le moyen de réponse (2b) est configuré pour réaliser automatiquement l'appel sous la forme d'un appel vocal ainsi que d'un appel vidéo ayant une transmission vidéo du dispositif externe (30) à l'unité de sonnette de porte (10), le moyen de réponse (2b) étant en outre configuré pour changer automatiquement l'établissement d'appel (100) en une connexion d'appel vocal entre l'unité de sonnette de porte (10) et le dispositif externe (30), et dès que la connexion d'appel vocal est réalisée, le son étant désactivé jusqu'à ce que l'utilisateur du dispositif externe (30) commence l'appel, la transmission vidéo étant interrompue dès que l'utilisateur du dispositif externe (30) commence l'appel.
